# EUROPEAN PATENT APPLICATION

(11) **EP 0 940 586 A1**
(43) Date of publication of application: **08.09.1999**
(21) Application number: 98830116.4
(22) Date of filing: 05.03.1998
(51) Int. Cl.: F16B 1/00, F16L 33/02

(54) **Clamping device for tubular elements**

(71) Applicant: Precision Spring Europa S.p.A., 20069 Trezzano Rosa Milano (IT)
(72) Inventor: Bellazzi, Luigi, 20040 Roncello, Milano (IT); Colombo, Luigi, 20035 Lissone, Milano (IT)
(74) Representative: Sutto, Luca

(57) **Abstract**

It is provided a clamping device for tubular elements in which an elastic ring-shaped body (2) defining at least one coil (3) has a coil section (8) in a radial plane provided with a maximum radial extension (9) greater than its maximum axial extension (10), so as to reduce the axial bulkiness of the device for the same section area thereof.

## Description

The present invention relates to a clamping device for tubular elements.

It is known that coupling between the end portions of a pipe, of the rigid type for example, and further flexible tubes or hose couplings generally made of rubber or other elastic material is usually carried out by use of elastic annular hose clamps or clamping collars.

These devices, adapted to clench portions of different pipes overlapping each other are generally of different typologies depending on whether they are engaged with the pipes by use of fastening means such as screws for example, for completing coupling, or are engaged with the pipes after an appropriate elastic deformation has been carried out, and their sealing action is ensured by springing back of the different deformed portions.

In particular the last-mentioned type of devices is usually made up of two circular metal coils of same diameter and coaxial with each other, obtained by curving and/or bending of a bar of circular section.

Either of the two coils has a first free end radially emerging from the winding and a second end also radially emerging from the winding but joined to the corresponding second end of the coil located in side by side relationship therewith in order to define a connecting bridge between the coils.

The device is such structured that each coil is obtained by bending the bar following a helix-shaped course of constant curvature over an angular extension greater than 360° so that in each coil thus made there is overlapping of the bar upon itself.

It is to note that the two coils are positioned in a symmetric manner relative to each other so that they are identical in mirror image relationship with respect to a median plane orthogonal to the winding axis.

Due to the particular geometry of the device, if the two radially-emerging ends of each of the two coils are moved close to each other by pressure, an elastic deformation of the winding is achieved with an increase in diameter of the coils themselves. By keeping the device in this condition, through use of appropriate pliers or tongs for example, the device itself is positioned over the overlapped tubular elements to be coupled. Once the pressing action is no longer exerted thereon, coils tend to go back to their starting conformation and acquire a lower diameter than that achieved in the deformed condition, thereby performing a clamping action on the pipes.

The devices thus conceived however suffer from some drawbacks.

First of all it is to point out that the geometry of the devices of known type shows at least four lengths of the metal bar generating the coil that have sections aligned in a direction parallel to the winding axis.

This means that the device in such a direction will have a bulkiness at least as large as, but generally larger than four times the diameter of the bar of which the winding is made.

In addition, it is also to note that in known clamping devices drawbacks may occur due to the fact that the expected or desired sealing action is not achieved.

In order to obviate the above mentioned drawback, increasing of the coil section is required so as to increase the transmitted force. All that however, involves a further undesirable increase in axial bulkiness, as well as problems in terms of mechanical strength of the material that, when submitted to deformation before the device is applied, can be subjected to too many internal stresses that will generate permanent sets in the plastic field or even cause cracking and breaking of the device itself.

Under this technical situation it is an object of the present invention to substantially obviate the mentioned drawbacks.

It is an important aim of the invention to provide a clamping device for pipes having a reduced axial extension for the same section area of the coil.

It is a further aim of the present invention to obtain a specific pressure higher than that of known devices on the portions to be coupled, the coil section area being still the same, so as to ensure a perfectly hermetic seal between the pipes.

The foregoing and further aims that will become more apparent in the progress of the following description are substantially achieved by a clamping device for tubular elements according to the features recited in the appended claims.

Further features and advantages will be best understood from the detailed description of a preferred non-exclusive embodiment of a clamping device for tubular elements in accordance with the present invention. This description will be given hereinafter with reference to the accompanying drawings given by way of non-limiting example, in which:
- Fig. 1 is a perspective view of a clamping device in accordance with the present invention;
- Fig. 2 is a section view in a radial plane of the device shown in Fig. 1;
- Figs. 3, 4, 5, 6, 7 and 8 are radial section views of different alternative embodiments of the device in accordance with the present invention.

With reference to the drawings, a clamping device for tubular elements has been generally identified by reference numeral 1.

Such a device is made up of a substantially ring-shaped elastic body 2 defining at least one coil 3.

Preferably the elastic body 2 will be formed of at least two coils 3 connected with each other by a linking bridge 4 in the form of an inverted "U" and positioned externally of the coils.

In more detail, each coil 3 defined by the elastic body is provided with a first free end or end portion 5, radially emerging away from the winding, whereas the second end, substantially radially emerging from the winding as well, is defined by said linking bridge 4.

The device is made in such a manner that each coil is obtained by bending a bar of elastic material having a helix-shaped course of constant radius over an angular extension greater than 360°, so as to define a first overlapping length 6 connected to the linking bridge 4 and a second overlapping length 7 connected to the free end 5 of coil 3.

The overlapping lengths 6, 7 of each coil are located at the same angular positions on the elastic body 2. In this way the elastic body is provided with at least one first and one second gripping portions disposed on the coil at angularly different positions and substantially radially emerging away from the winding.

Practically, the linking bridge 4 defines the first gripping portion whereas the second gripping portion is made up of the two free ends 5 of the elastic body.

Due to the particular conformation of the elastic body, by moving the gripping portions close to each other, coils 3 are deformed in a direction adapted to increase their diameter. Once the device has been positioned on the ends of the pipes to be coupled and the action exerted on the gripping portions has been stopped, the device elastically goes back to the original configuration, thereby exerting a clamping force on the pipes.

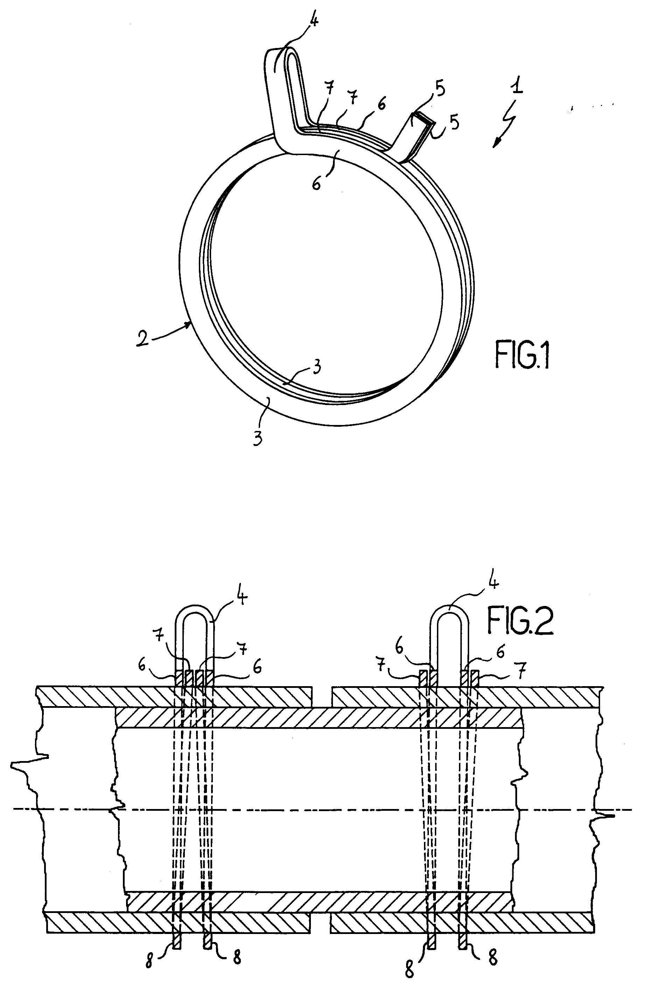

Shown in Fig. 2 are two different typologies of the device in accordance with the invention.

In a first typology the first overlapping lengths 6 axially held within the second overlapping lengths 7 are shown. In the second embodiment instead, the first overlapping lengths 6 are disposed axially internally of the two other lengths 7.

Obviously, the relative axial arrangement both of the coils and of the overlapping lengths may be of any type depending on structure and construction requirements. It will be in addition possible for example, to make a device in which the first and second overlapping lengths are disposed at axially alternated positions (not shown).

It will be also possible to accomplish a device made up of a single coil 3 having a helix-shaped course in which the gripping portions consist of the free ends of the coil itself, as well as devices made up of three or more coils suitably connected to each other by several linking bridges such arranged as to be able to define opposite gripping portions.

In any case it will be always possible, by appropriate pliers, to act on the first and second gripping portions so as to cause an increase in the coil diameter and enable application of the clamping device to the pipes.

Advantageously, a section 8 of coil 3 in a radial plane, under a condition of engagement with the tubular element, has a maximum radial extension 9 greater than its maximum axial extension 10.

Generally, the radial bulkiness 9 of the section will be greater than the axial bulkiness of same by at least 50%.

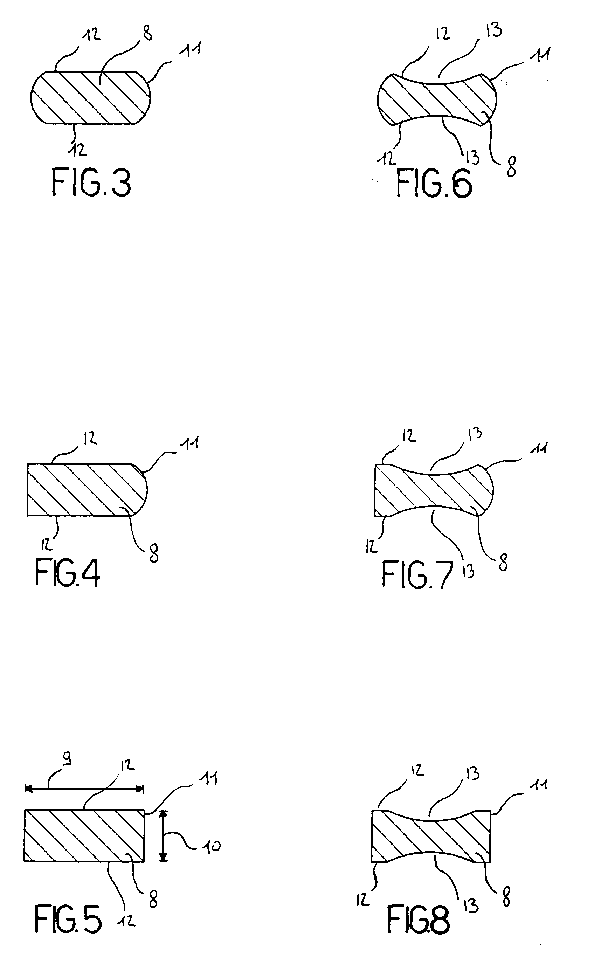

In its most specific embodiments, section 8 of coil 3 will have a rest side 11 in contact with an outer surface of the tubular element, which rest side may have either a substantially rectilinear extension (see Figs. 5 and 8) or a curved extension towards the section exterior (in the form of an arc of a circumference, for example; see Figs. 3, 4, 6 and 7).

On the other hand, it is to note that in the embodiments in which the rest side 11 is of a rectilinear configuration, respective curved linking portions are usually provided between the rest side 11 and the sides 12 adjacent to it (embodiment not shown in the figure). Generally, section 8 of coil 3 will be of substantially quadrangular and preferably rectangular form, in which the small side coincides with the rest side 11.

The two sides 12 adjacent to the rest side 11 extending away from the tubular element can either show a rectilinear course or have respective lateral relief regions.

Obviously the different courses of the section-defining sides can be combined with each other to give rise to different coil sections (Figs. 3-8). It is in any case essential that the axial extension 10 should be maintained lower than the radial extension 9. It is however to note that preferably both axial 10 and radial 9 extensions of the section are preferably constant along the whole coil course.

It is finally to point out that the elastic body 2 of the device is of a single piece construction and is obtained by suitably curving and/or bending a bar or a continuous strip of the desired section made of a material having the appropriate elastic features, such as spring steel for example.

The invention achieves important advantages.

First of all a clamping device in accordance with the present invention enables a radial action of much greater intensity than that of known devices to be exerted on the hose coupling, the section area being the same. In this way a perfect seal can be accomplished at the overlapping region of the pipes.

In addition, the elastic body in accordance with the invention appears to be very advantageous in that it is provided with a very reduced axial bulkiness.

Furthermore, the presence of contact surfaces provided with curved linking portions and the presence of contact surfaces of curved profile for eliminating possible sharp edges avoid arising of dangerous tensions concentrated on the pipe or hose coupling of elastic material.

Finally, due to the presence of lateral relief regions in the different sections of the elastic body, substantially the same mechanical performance is achieved for the same section bulkiness, while there is a reduction in the utilized material and, as a result, a reduction in the overall weight of the device.

## Claims

1. A clamping device for tubular elements comprising a substantially ring-shaped elastic body (2) defining at least one coil (3),
characterized in that a section (8) of the coil (3) in a radial plane, in an engagement condition with the tubular element, has a maximum radial extension (9) greater than its maximum axial extension (10).

2. A clamping device as claimed in claim 1, characterized in that said maximum radial extension (9) is greater than the maximum axial extension (10) by 1.5 times.

3. A clamping device as claimed in claim 1, characterized in that the coil section (8), in an engagement condition, exhibits a substantially rectilinear rest side (11) in contact with an outer surface of the tubular element.

4. A clamping device as claimed in claim 1, characterized in that the coil section (8), in an engagement condition, exhibits a rest side (11) substantially curved towards the section exterior, in contact with an outer surface of the tubular element.

5. A clamping device as claimed in claim 3 or 4, characterized in that the section (8) of the coil (3) has two sides (12) adjacent to the rest side that extend away from the tubular element, at least one and preferably both of the adjacent sides (12) defining a lateral relief region (13).

6. A clamping device as claimed in claim 1, characterized in that the elastic body (2) has at least one first and one second gripping portions substantially radially emerging away from the coil (3) and disposed thereon at angularly different positions.

7. A clamping device as claimed in claim 6, characterized in that said elastic body defines at least two coils (3) connected with each other by a linking bridge (4), said linking bridge (4) defining the first one of said gripping portions.

8. A clamping device as claimed in claim 1, characterized in that the elastic body (2) is of one piece construction and preferably consists of a continuous strip of elastic material.

9. A clamping device as claimed in claim 1, characterized in that the section (8) of the coil (3) is of a substantially quadrangular, preferably rectangular, shape.

10. A clamping device as claimed in claim 7, characterized in that each coil (3) defined by the elastic body (2) has a helix-shaped course in order to define a first overlapping length (6) connected with the linking bridge (4) and a second overlapping length (7) connected with a free end (4) of the coil, the overlapping lengths (6, 7) of each coil occupying the same angular positions on the elastic body.

11. A clamping device as claimed in claim 1, characterized in that the coil section (8) has both a radial extension (9) and an axial extension (10) substantially constant along the whole coil course.

12. A clamping device as claimed in claim 6, characterized in that the second gripping portion is defined by two free end portions (5) of the elastic body (2).

13. A clamping device as claimed in claim 10, characterized in that the first overlapping lengths (6) of each coil (3) are axially held within the second overlapping lengths (7).

14. A clamping device as claimed in claim 10, characterized in that the first overlapping lengths (6) of each coil are axially external relative to the second overlapping lengths (7).

15. A clamping device as claimed in claim 10, characterized in that the first overlapping lengths (6) and second overlapping lengths (7) are disposed at axially alternated positions.
